# EUROPEAN PATENT SPECIFICATION

(11) **EP 1 915 409 B1**
(45) Date of publication and mention of the grant of the patent: **21.04.2010**
(21) Application number: 06778255.7
(22) Date of filing: 16.08.2006
(51) Int. Cl.: C08G 18/24, C08G 18/34, C08G 18/38, C08G 18/40, C08G 18/42, C08G 18/62, C08G 18/79, C09D 175/04

(54) **COATING COMPOSITION COMPRISING A POLYISOCYANATE AND A POLYOL**
BESCHICHTUNGSZUSAMMENSETZUNG, ENTHALTEND EIN POLYISOCYANAT UND EIN POLYOL
COMPOSITION DE REVETEMENT COMPRENANT UN POLYISOCYANATE ET UN POLYOL

(30) Priority: 17.08.2005 EP 05107563; 30.08.2005 US 712123 P
(43) Date of publication of application: 30.04.2008
(73) Proprietor: Akzo Nobel Coatings International BV, 6824 BM Arnhem (NL)
(72) Inventor: GANGULI, Pokon, NL-1059 AL Amsterdam (NL); VAN DER PUTTEN, Antonius Josephus, NL-2211 VZ Noordwijkerhout (NL); MULDER, Berend, NL-2563 JC Den Haag (NL)
(74) Representative: Schalkwijk, Pieter Cornelis
(86) International application number: PCT/EP2006/065355
(87) International publication number: WO 2007/020270

(56) References cited:
- EP-A- 0 454 219
- EP-A2- 0 276 667
- US-A1- 2003 069 382
- DATABASE WPI Week 199101 Derwent Publications Ltd., London, GB; AN 1991-003178 XP002408855 & JP 02 279713 A (SANKYO ORGANIC CHEM CO) 15 November 1990 (1990-11-15)

## Description

The invention relates to a coating composition comprising a polyisocyanate, a polyol, a metal based catalyst for the addition reaction of isocyanate groups and hydroxyl groups, a thiol-functional compound, and a carboxylic acid. The invention also relates to a kit of parts for preparation of the coating composition and to the use of the composition.

A coating composition of the above-mentioned type is known from European patent application EP 0454219 A. This document relates to polyurethanes produced via the catalyzed reaction between a polyol and a polyisocyanate, and to coating compositions based upon these reaction mixtures. The reaction is catalyzed by a tin and/or bismuth catalyst which has been complexed by reaction with a molar excess of a complexing agent selected from mercapto compounds and/or polyphenols. The composition may comprise a volatile acid. Formic acid and acetic acid are specifically mentioned.
Although coatings with acceptable properties can be prepared from the known composition, a further improvement of the balance of cure speed, pot life, and appearance properties of the cured coatings is desirable, in particular in cases where a high or very high non-volatile content, i.e. a low content of volatile organic compounds (VOC), is required. For example, using a lower amount of curing catalysts decreases the risk of coating defects caused by entrapped solvents and/or gases. However, it leads to longer drying times and decreased hardness of the coatings as well, with the risk of sagging and/or dirt pick-up. Longer drying times are undesirable in view of the high throughput of coating operations. Furthermore, low VOC coating compositions comprising a high curing catalyst load to obtain a short drying time suffer from foam stabilization in the drying coating, leading to pinholes in the dried coating layer. Pinholes detract from the appearance and durability of coating layers. Thus, a very good balance of high cure speed, long pot life, low VOC content, and good appearance of the cured coating cannot be achieved with the known coating composition.

Accordingly, the invention seeks to provide a coating composition having a favourable balance of properties, i.e. a low content of volatile organic solvent at application viscosity, a high cure speed, and a long pot life, leading to coatings with good appearance properties, in particular a low susceptibility to pinholes, and good hardness. In addition, the coating composition should also provide cured coatings exhibiting other properties required for motor vehicle exterior finishes, such as flexibility, scratch resistance, gloss, durability, and resistance to chemicals and UV radiation.

The invention now provides a coating composition comprising a polyisocyanate, a polyol, a metal based catalyst for the addition reaction of isocyanate groups and hydroxyl groups, a thiol-functional compound, and a carboxylic acid, wherein the carbonyl group of the carboxylic acid is in conjugation with a π-electron system.

The coating composition of the invention provides a favourable balance of properties, i.e. a low content of volatile organic solvent at application viscosity, a high cure speed, and a long pot life, leading to coatings with good appearance properties, in particular a low susceptibility to pinholes, and good hardness. In addition, the coating composition also provides cured coatings exhibiting other properties required for motor vehicle exterior finishes, such as flexibility, scratch resistance, gloss, durability, and resistance to chemicals and UV radiation.

Suitable isocyanate-functional crosslinkers for use in the coating composition are isocyanate-functional compounds comprising at least two isocyanate groups. Preferably, the isocyanate-functional crosslinker is a polyisocyanate, such as an aliphatic, cycloaliphatic or aromatic di-, tri- or tetra-isocyanate. Examples of diisocyanates include 1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, dodecamethylene diisocyanate, ω,ω'-dipropylether diisocyanate, 1,3-cyclopentane diisocyanate, 1,2-cyclohexane diisocyanate, 1,4-cyclohexane diisocyanate, isophorone diisocyanate, 4-methyl-1,3-diisocyanatocyclohexane, trans-vinylidene diisocyanate, dicyclohexyl methane-4,4'-diisocyanate (Desmodur^{®} W), toluene diisocyanate, 1,3-bis(isocyanatomethyl) benzene, xylylene diisocyanate, α,α,α',α'-tetramethyl xylylene diisocyanate (TMXDI^{®}), 1,5-dimethyl-2,4-bis(2-isocyanatoethyl) benzene, 1,3,5-triethyl-2,4-bis(isocyanatomethyl) benzene, 4,4'-diisocyanato-diphenyl, 3,3'-dichloro-4,4'-diisocyanato-diphenyl, 3,3'-diphenyl-4,4'-diisocyanato-diphenyl, 3,3'-dimethoxy-4,4'-diisocyanato-diphenyl, 4,4'-diisocyanato-diphenyl methane, 3,3'-dimethyl-4,4'-diisocyanato-diphenylmetharie, and diisocyanatonaphthalene. Examples of triisocyanates include 1,3,5-triisocyanatobenzene, 2,4,6-triisocyanatotoluene, 1,8-diisocyanato-4-(isocyanatomethyl) octane, and lysine triisocyanate. Adducts and oligomers of polyisocyanates, for instance biurets, isocyanurates, allophanates, uretdiones, urethanes, and mixtures thereof are also included. Examples of such oligomers and adducts are the adduct of 2 molecules of a diisocyanate, for example hexamethylene diisocyanate or isophorone diisocyanate, to a diol such as ethylene glycol, the adduct of 3 molecules of hexamethylene diisocyanate to 1 molecule of water (available under the trademark Desmodur N of Bayer), the adduct of 1 molecule of trimethylol propane to 3 molecules of toluene diisocyanate (available under the trademark Desmodur L of Bayer), the adduct of 1 molecule of trimethylol propane to 3 molecules of isophorone diisocyanate, the adduct of 1 molecule of pentaerythritol to 4 molecules of toluene diisocyanate, the adduct of 3 moles of m-α,α,α',α'-tetramethyl xylene diisocyanate to 1 mole of trimethylol propane, the isocyanurate trimer of 1,6-diisocyanatohexane, the isocyanurate trimer of isophorone diisocyanate, the uretdione dimer of 1,6-diisocyanatohexane, the biuret of 1,6-diisocyanatohexane, the allophanate of 1,6-diisocyanatohexane, and mixtures thereof. Furthermore, (co)polymers of isocyanate-functional monomers such as α,α'-dimethyl-m-isopropenyl benzyl isocyanate are suitable for use.

Examples of suitable polyols include compounds comprising at least two hydroxyl groups. These may be monomers, oligomers, polymers, and mixtures thereof. Examples of hydroxy-functional oligomers and monomers are castor oil, trimethylol propane, and diols. Branched diols such as described in International patent application WO 98/053013, e.g. 2-butyl-ethyl-1 ,3-propanediol, may be mentioned in particular.
Examples of suitable polymers include polyester polyols, polyacrylate polyols, polycarbonate polyols, polyurethane polyols, melamine polyols, and mixtures and hybrids thereof. Such polymers are generally known to the skilled person and are commercially available. Suitable polyester polyols, polyacrylate polyols, and mixtures thereof are for example described in International patent application WO 96/20968 and in European patent application EP 0688840 A. Examples of suitable polyurethane polyols are described in International patent application WO 96/040813.
Further examples include hydroxy-functional epoxy resins, alkyds, and dendrimeric polyols such as described in International patent application WO 93/17060. The coating composition can also comprise latent hydroxy-functional compounds such as compounds comprising bicyclic orthoester, spiro-orthoester, spiro-ortho silicate groups, or bicyclic amide acetals. These compounds and their use are described in International patent applications WO 97/31073, WO 2004/031256, and WO 2005/035613, respectively.

As mentioned above, the coating composition of the invention also comprises a metal based catalyst for the addition reaction of isocyanate groups and hydroxyl groups. Such catalysts are known to the skilled person. The catalyst is generally used in an amount of 0.001 to 10 weight-%, preferably 0.002 to 5 weight-%, more preferably in an amount of 0.01 to 1 weight-%, calculated on the non-volatile matter of the coating composition. Suitable metals in the metal based catalyst include zinc, cobalt, manganese, zirconium, bismuth, and tin. It is preferred that the coating composition comprises a tin based catalyst. Well-known examples of tin based catalysts are dimethyl tin dilaurate, dimethyl tin diversatate, dimethyl tin dioleate, dibutyl tin dilaurate, dioctyl tin dilaurate, and tin octoate.

Suitable thiol-functional compounds include dodecyl mercaptan, mercapto ethanol, 1,3-propanedithiol, 1,6-hexanedithiol, methylthioglycolate, 2-mercaptoacetic acid, mercaptosuccinic acid, and cysteine. Also suitable are esters of a thiol-functional carboxylic acid with a polyol, such as esters of 2-mercaptoacetic acid, 3-mercaptopropionic acid, 2-mercaptopropionic acid, 11-mercaptoundecanoic acid, and mercaptosuccinic acid. Examples of such esters include pentaerythritol tetrakis (3-mercaptopropionate), pentaerythritol tetrakis (2-mercaptoacetate), trimethylol propane tris (3-mercaptopropionate), trimethylol propane tris (2-mercaptopropionate), and trimethylol propane tris (2-mercaptoacetate). A further example of such a compound consists of a hyperbranched polyol core based on a starter polyol, e.g. trimethylol propane and dimethylol propionic acid, which is subsequently esterified with 3-mercaptopropionic acid and isononanoic acid. These compounds are described in European patent application EP-A-0 448 224 and International patent application WO 93/17060.
Addition products of H₂S to epoxy-functional compounds also give thiol-functional compounds. These compounds may have a structure of the following formula T[(O-CHR-CH₂-O)ₙCH₂CHXHCH₂YH]ₘ, with T being a m valent organic moiety, R being hydrogen or methyl, n being an integer between 0 and 10, X and Y being oxygen or sulfur, with the proviso that X and Y are not equal. An example of such a compound is commercially available from Cognis under the trademark Capcure@ 3/800.
Other syntheses to prepare compounds comprising thiol-functional groups involve: the reaction of an aryl or alkyl halide with NaHS to introduce a pendant mercapto group into the alkyl and aryl compounds, respectively; the reaction of a Grignard reagent with sulfur to introduce a pendant mercapto group into the structure; the reaction of a polymercaptan with a polyolefin according to a nucleophilic reaction, an electrophilic reaction or a radical reaction; and the reaction of disulfides. Preferred thiol-functional compounds are pentaerythritol tetrakis(3-mercapto propionate), trimethylol propane tris(3-mercaptopropionate), and Capcure 3/800. In another embodiment of the invention the thiol groups can be covalently attached to a resin. Such resins include thiol-functional polyurethane resins, thiol-functional polyester resins, thiol-functional polyaddition polymer resins, thiol-functional polyether resins, thiol-functional polyamide resins, thiol-functional polyurea resins, and mixtures thereof. Thiol-functional resins can be prepared by the reaction of H₂S with an epoxy group or an unsaturated carbon-carbon bond-containing resin, the reaction between a hydroxyl-functional resin and a thiol-functional acid, and by the reaction of an isocyanate-functional polymer and either a thiol-functional alcohol or a di- or polymercapto compound.
The thiol-functional compound is generally present in an amount of 0.001 to 10 weight-%, preferably 0.002 to 5 weight-%, more preferably in an amount of 0.01 to 2 weight-%, calculated on the non-volatile matter of the coating composition. The actual amount of thiol-functional compound depends on the type and amount of metal based catalyst employed, on the thiol equivalent weight of the thiol-functional compound, and on the desired property profile of the coating composition. In some embodiments it can be beneficial to use the thiol-functional compound in such an amount that the composition comprises a molar excess of thiol groups over the metal atoms of the metal based catalyst.

As mentioned above, the coating composition of the invention comprises a carboxylic acid wherein the carbonyl group of the carboxylic acid is in conjugation with a π-electron system. Examples of suitable carboxylic acids are aromatic carboxylic acids, i.e. carboxylic acids wherein the carboxylic acid group is linked to an aromatic ring via a single covalent bond. In this case, the carbonyl group of the carboxylic acid is in conjugation with the aromatic π-electron system. The aromatic carboxylic acid may be a monocarboxylic acid or a polycarboxylic acid. Suitable examples include phthalic acid, alkyl- and/or alkoxy-substituted phthalic acid, half-esters of phthalic anhydride, half esters of alkyl- and/or alkoxy- substituted phthalic anhydride, benzoic acid, alkyl- and/or alkoxy-substituted benzoic acid and mixtures of such aromatic mono- and polycarboxylic acids. Benzoic acid is a preferred aromatic carboxylic acid.
In another embodiment, the carboxylic acid is an alpha-beta unsaturated carboxylic acid. In this case, the carbonyl group of the carboxylic acid is in conjugation with the π-electron system of a carbon-carbon double or triple bond. Examples of suitable alpha-beta unsaturated carboxylic acids are acrylic acid, methacrylic acid, itaconic acid, citraconic acid, crotonic acid, fumaric acid, sorbic acid, cinnamic acid, and maleic acid. Also suitable are half esters of fumaric and maleic acid, such as mono methyl maleate, mono ethyl maleate, or the corresponding fumarates.
In one embodiment, the carboxylic acid wherein the carbonyl group of the carboxylic acid is in conjugation with a π-electron system may be attached to a polymer backbone, such as carboxylic acid groups present in polyesters as a consequence of incomplete conversion during polyester preparation. When the carboxylic acid group is linked to a higher molecular weight polymer backbone, the beneficial effect of the carboxylic acid becomes less pronounced, possibly as a consequence of sterical hindrance. Therefore, if the acid is attached to a polymeric backbone, it is preferred that the number average molecular weight of the polymer is up to 1,000, or up to 800. The carboxylic acid suitably is provided in non-polymeric form.

The carboxylic acid wherein the carbonyl group of the carboxylic acid is in conjugation with a π-electron system is generally present in a higher weight proportion than the metal based catalyst or the thiol-functional compound. The actual amount of carboxylic depends on the type and amount of metal based catalyst employed, on the type and amount of thiol-functional compound, on the type and molecular weight of the specific carboxylic acid used, and on the desired property profile of the coating composition. Examples of suitable amounts of carboxylic acid are 0.1 to 18 weight-%, or 0.2 to 10 weight-%, or 0.5 to 5 weight-%, calculated on the non-volatile matter of the coating composition.

In the coating composition according to the invention the equivalent ratio of isocyanate-functional groups to hydroxyl groups suitably is between 0.5 and 4.0, preferably between 0.7 and 3.0, and more preferably between 0.8 and 2.5. Generally, the weight ratio of hydroxy-functional binders to isocyanate-functional crosslinker in the coating composition, based on non-volatile content, is between 85 : 15 and 15 : 85, preferably between 70 : 30 and 30 : 70.

The coating composition may be used and applied without a volatile diluent, in particular when low molecular weight binders, optionally in combination with one or more reactive diluents, are used. Alternatively, the coating composition may optionally comprise a volatile organic solvent. Preferably, the coating composition comprises less than 500 g/l of volatile organic solvent based on the total composition, more preferably less than 480 g/l, and most preferably 420 g/l or less. The non-volatile content of the composition, usually referred to as the solid content, preferably is higher than 50 weight-% based on the total composition, more preferably higher than 54 weight-%, and most preferably higher than 60 weight-%.

Examples of suitable volatile organic diluents are hydrocarbons, such as toluene, xylene, Solvesso 100, ketones, terpenes, such as dipentene or pine oil, halogenated hydrocarbons, such as dichloromethane, ethers, such as ethylene glycol dimethyl ether, esters, such as ethyl acetate, ethyl propionate, n-butyl acetate or ether esters, such as methoxypropyl acetate or ethoxyethyl propionate. Also mixtures of these compounds can be used.
If so desired, it is possible to include one or more so-called "exempt solvents" in the coating composition. An exempt solvent is a volatile organic compound that does not participate in an atmospheric photochemical reaction to form smog. It can be an organic solvent, but it takes so long to react with nitrogen oxides in the presence of sunlight that the Environmental Protection Agency of the United States of America considers its reactivity to be negligible. Examples of exempt solvents that are approved for use in paints and coatings include acetone, methyl acetate, parachlorobenzotrifluoride (commercially available under the name Oxsol 100), and volatile methyl siloxanes. Also tertiary butyl acetate is being considered as an exempt solvent.

In addition to the components described above, other compounds can be present in the coating composition according to the present invention. Such compounds may be binders and/or reactive diluents, optionally comprising reactive groups which may be crosslinked with the aforesaid hydroxy-functional compounds and/or isocyanate-functional crosslinkers. Examples of such other compounds are ketone resins, aspargyl acid esters, and latent or non-latent amino-functional compounds such as oxazolidines, ketimines, aldimines, diimines, secondary amines, and polyamines. These and other compounds are known to the skilled person and are mentioned, int. al., in US 5214086.

The coating composition may further comprise other ingredients, additives or auxiliaries commonly used in coating compositions, such as pigments, dyes, surfactants, pigment dispersion aids, levelling agents, wetting agents, anti-cratering agents, antifoaming agents, antisagging agents, heat stabilizers, light stabilizers, UV absorbers, antioxidants, and fillers.

As is usual with coating compositions comprising a hydroxy-functional binder and an isocyanate-functional crosslinker, the composition according to the invention has a limited pot life. Therefore, the composition is suitably provided as a multicomponent composition, for example as a two-component composition or as a three-component composition. Therefore, the invention also relates to a kit of parts for preparation of the coating composition comprising
a) a binder module comprising a polyol,
b) a crosslinker module comprising a polyisocyanate, and
c) optionally, a diluent module comprising a volatile organic solvent,
wherein the metal based catalyst for the addition reaction of isocyanate groups and hydroxyl groups, the thiol-functional compound, and the carboxylic acid wherein the carbonyl group of the carboxylic acid is in conjugation with a π-electron system are distributed, individually or in combination, over one or more of the modules. In a preferred embodiment, the metal based catalyst, the thiol-functional compound, and the carboxylic acid wherein the carbonyl group of the carboxylic acid is in conjugation with a π-electron system are distributed, individually or in combination, over one or more of modules a) and c). Providing the components of the composition in the form of a kit of parts has the additional advantage that the components can be provided in the required molar ratios. Hence, the risk of errors caused by incorrect mixing ratios of the individual components is minimized.

The coating composition of the invention can be applied to any substrate. The substrate may be, for example, metal, e.g., iron, steel, and aluminium, plastic, wood, glass, synthetic material, paper, leather, or another coating layer. The other coating layer can be comprised of the coating composition of the current invention or it can be a different coating composition. The coating compositions of the current invention show particular utility as clear coats, base coats, pigmented top coats, primers, and fillers. When the coating composition of the invention is a clear coat, it is preferably applied over a colour- and/or effect-imparting base coat. In that case, the clear coat forms the top layer of a multi-layer lacquer coating such as typically applied on the exterior of automobiles. The base coat may be a water borne base coat or a solvent borne base coat.
The coating compositions are suitable for coating objects such as bridges, pipelines, industrial plants or buildings, oil and gas installations, or ships. The compositions are particularly suitable for finishing and refinishing automobiles and large transportation vehicles, such as trains, trucks, buses, and airplanes.

The applied coating composition can be cured very effectively at a temperature of, e.g., 0-60°C. If so desired, the coating composition may be oven cured, e.g. at a temperature in the range of 60-120°C. Alternatively, curing may be supported by (near) infrared radiation. Before curing at elevated temperature the applied coating composition may optionally be subjected to a flash-off phase.

It is to be understood that the term coating composition as used herein also includes its use as adhesive composition.

### Examples

Abbreviations and raw materials used:

| | |
|---|---|
| Trigonox B | A peroxide based polymerization initiator ex Akzo Nobel Chemicals |
| BYK 331 solution | A mixture consisting of 10 weight-% of BYK 331, a silicone additive ex BYK Chemie, and 90 weight-% of n-butyl acetate |
| Tinuvin 1130 | UV absorber ex Ciba Specialty Chemicals |
| Tinuvin 292 | A light stabilizer ex Ciba Specialty Chemicals |
| Solvent | A mixture of n-butyl acetate and methyl isoamyl ketone in the weight ratio 72/16 |
| DBTL solution | A mixture consisting of 10 weight-% of dibutyl tin dilaurate and 90 weight-% of n-butyl acetate |
| PTMP | Pentaerythritol (tetrakis) 3-mercaptopropionate |
| Benzoic acid solution | A mixture consisting of 12 weight-% of benzoic acid, 72 weight-% of n-butyl acetate, and and 12 weight-% of methyl isoamyl ketone |
| Acetic acid solution | A mixture consisting of 12 weight-% of acetic acid, 72 weight-% of n-butyl acetate, and and 12 weight-% of methyl isoamyl ketone |
| Hardener | A mixture consisting of 70 weight-% of Tolonate HDL-LV, the isocyanurate trimer of hexamethylene diisocyanate ex Rhodia, and 15 weight-% of n-butyl acetate, and 15 weight-% of 3-ethoxy ethyl propionate |

### Preparation of a polyester polyol

In a reaction vessel equipped with a stirrer, a heating system, a thermocouple, a packed column, a condensor, and a water separator were placed 440 parts by weight of trimethylol propane, 170 parts by weight of hexahydrophthalic anhydride, and 390 parts by weight of Edenor V85. Furthermore, an amount of 1 weight-%, calculated on the building blocks, of 85 weight-% aqueous phosphoric acid was added as catalyst. Under inert gas the temperature was increased gradually to 240°C. The reaction water was distilled off at such a rate that the temperature at the top of the column did not exceed 102°C. The reaction was continued until a polyester having a hydroxyl value of 306 mg KOH/g was obtained.

### Preparation of a polyacrylate polyol

In a polymerization vessel a polyacrylate polyol was prepared in n-butyl acetate from 5.7 parts by weight of methacrylic acid, 110.3 parts by weight of butyl methacrylate, 164.7 parts by weight of hydroxyethyl methacrylate, and 224 parts by weight of tertiary butyl methacrylate. 25.3 parts by weight of Trigonox B were used as polymerization initiator. The polyacrylate polyol solution had a non-volatile content of 67 weight-%. GPC data: Mn 2090, Mw 4470, theoretical OH number: 140 mg KOH/g, calculated on resin solids, i.e. excluding solvent.

### Preparation of coating compositions

Coating composition 1 according to the invention and comparative compositions A to D were prepared by mixing the components indicated in Table 1. The amounts in Table 1 are given in parts by weight.

**Table 1**

| Component | Example A | Example B | Example C | Example D | Example 1 |
|---|---|---|---|---|---|
| Polyacrylate polyol | 136.8 | 136.8 | 136.8 | 136.8 | 136.8 |
| Polyester polyol | 51.1 | 51.1 | 51.1 | 51.1 | 51.1 |
| Byk 331 solution | 2.4 | 2.4 | 2.4 | 2.4 | 2.4 |
| Tinuvin 292 | 2.4 | 2.4 | 2.4 | 2.4 | 2.4 |
| Tinuvin 1130 | 1.5 | 1.5 | 1.5 | 1.5 | 1.5 |
| Solvent | 67.3 | 67.3 | 13.9 | 13.9 | 13.9 |
| DBTL solution | 7.3 | 7.3 | 7.3 | 7.3 | 7.3 |
| PTMP | - | 1.2 | - | 1.2 | 1.2 |
| Benzoic acid solution | - | - | 60.8 | - | 60.8 |
| Acetic acid solution | - | - | - | 60.8 | - |
| Hardener | 139.8 | 139.8 | 139.8 | 139.8 | 139.8 |
| Viscosity (s) | 14.5 | 14.3 | 15.0 | 13.7 | 14.6 |
| Pot life (minutes) | 21 | 69 | 57 | 75 | 100 |

The viscosity was measured with a DIN-cup and is indicated in seconds. The viscosity indicated in Table 1 is the initial viscosity after mixing. The pot life is the time required until a viscosity of 21 seconds is reached after mixing of the composition.
The coating compositions of comparative Examples A to D and of Example 1 according to the invention were spray applied in 2 or 3 layers as clear coats to metal panels which were pre-coated with a base coat. The coatings were cured for 30 minutes at 60°C and subsequently stored at room temperature. The dry layer thickness of the clear coats was about 60 µm for two layers and 85 µm in the case of 3 layers.

After cure the number of pinholes between the various samples were compared and translated into a popping score on a scale of 1 to 10 (1 = severe formation of pinholes, 10 = very few or no pinholes).
Appearance is expressed as the enamel hold out (EHO) and was determined visually in order to judge the general appearance. The following aspects were taken into consideration: gloss, wrinkling, flow, and image clarity/distinctness of image. These aspects were combined into one score on a 1 - 10 scale (1 = very bad appearance, 10 = excellent appearance).
The warm tackiness was determined manually by pressing a finger on the warm coating surface after curing at 60 °C. The results are reported on a scale from 1 to 10 (1 = very tacky, 10 = not tacky).
Levelling was determined visually by inspecting the flow and smoothness of the cured coating. The results are reported on scale from 1 to 10 (1 = very poor levelling, 10 = excellent levelling).
Some properties of the coatings are summarized in Table 2.

**Table 2**

| | Example A | Example B | Example C | Example D | Example 1 |
|---|---|---|---|---|---|
| Appearance (EHO) | 6 | 4 | 6 | 6 | 8 |
| Popping | 3 | 1 | 3 | 3 | 7 |
| Warm tackiness | 7.5 | 9 | 8 | 9 | 9 |
| Leveling | 4 | 5 | 7 | 7.5 | 7.5 |

From Table 1 it can be inferred that the coating composition according to the invention has a longer pot life than all comparative compositions. From Table 2 it can be inferred that the appearance of the clear coat is better than the appearance of comparative clear coats. Also pinholes are virtually absent from the clear coat from Example 1 according to the invention. After curing for 30 minutes at 60°C, all samples exhibit a low degree of tackiness, indicating a good curing speed. These results demonstrate that the coating composition of the invention has an improved balance of properties.

## Claims

1. A coating composition comprising a polyisocyanate, a polyol, a metal based catalyst for the addition reaction of isocyanate groups and hydroxyl groups, a thiol-functional compound, and a carboxylic acid, **characterized in that** the carbonyl group of the carboxylic acid is in conjugation with a π-electron system.

2. A coating composition according to claim 1, wherein the carboxylic acid is an aromatic carboxylic acid.

3. A coating composition according to claim 1, wherein the carboxylic acid is an alpha-beta unsaturated carboxylic acid.

4. A coating composition according to any one of the preceding claims, wherein the catalyst for the addition reaction of isocyanate groups and hydroxyl groups is based on a metal selected from tin, bismuth, zirconium, and mixtures thereof.

5. A coating composition according to any one of the preceding claims, wherein the amount of metal based catalyst is in the range of 0.001 to 10 weight-%, calculated on the non-volatile matter of the composition.

6. A coating composition according to any one of the preceding claims, wherein the amount of thiol-functional compound is in the range of 0.001 to 10 weight-%, calculated on the non-volatile matter of the composition.

7. A coating composition according to any one of the preceding claims, wherein the amount of carboxylic acid wherein the carbonyl group of the carboxylic acid is in conjugation with a π-electron system is in the range of 0.1 to 18 weight-%, calculated on the non-volatile matter of the composition.

8. A coating composition according to any one of the preceding claims, wherein the composition comprises a volatile organic solvent.

9. A coating composition according to claim 8, wherein the amount of volatile organic solvent does not exceed 420 g/I of coating composition.

10. A kit of parts for preparing the coating composition according to any one of the preceding claims comprising
a) a binder module comprising a polyol,
b) a crosslinker module comprising a polyisocyanate, and
c) optionally, a diluent module comprising a volatile organic solvent,
wherein the metal based catalyst for the addition reaction of isocyanate groups and hydroxyl groups, the thiol-functional compound, and the carboxylic acid wherein the carbonyl group of the carboxylic acid is in conjugation with a π-electron system are distributed, individually or in combination, over one or more of the modules.

11. A kit of parts according to claim 10, wherein the metal based catalyst for the addition reaction of isocyanate groups and hydroxyl groups, the thiol-functional compound, and the carboxylic acid wherein the carbonyl group of the carboxylic acid is in conjugation with a π-electron system are distributed, individually or in combination, over one or more of modules a) and c).

12. Use of the coating composition according to any one of the preceding claims 1 to 8 for forming a coating layer in the finishing and refinishing of automobiles and transportation vehicles

13. Use according to claim 12, wherein the formed coating layer is a layer in a multi-layer lacquer coating.

14. Use according to claim 13, wherein the formed coating layer is a top coat layer in a multi-layer lacquer coating.

## Patentansprüche

1. Beschichtungszusammensetzung, umfassend ein Polyisocyanat, ein Polyol, einen Katalysator auf Metallbasis für die Additionsreaktion von Isocyanatgruppen und Hydroxygruppen, eine thiolfunktionelle Verbindung und eine Carbonsäure, **dadurch gekennzeichnet, dass** sich die Carbonylgruppe der Carbonsäure in Konjugation mit einem π-Elektronensystem befindet.

2. Beschichtungszusammensetzung gemäß Anspruch 1, wobei die Carbonsäure eine aromatische Carbonsäure ist.

3. Beschichtungszusammensetzung gemäß Anspruch 1, wobei die Carbonsäure eine α,β-ungesättigte Carbonsäure ist.

4. Beschichtungszusammensetzung gemäß einem der vorstehenden Ansprüche, wobei der Katalysator für die Additionsreaktion von Isocyanatgruppen und Hydroxygruppen auf einem Metall beruht, das aus Zinn, Bismut, Zirconium und Gemischen davon ausgewählt ist.

5. Beschichtungszusammensetzung gemäß einem der vorstehenden Ansprüche, wobei die Menge des Katalysators auf Metallbasis im Bereich von 0,001 bis 10 Gew.-% liegt, bezogen auf den nichtflüchtigen Anteil der Zusammensetzung.

6. Beschichtungszusammensetzung gemäß einem der vorstehenden Ansprüche, wobei die Menge der thiolfunktionellen Verbindung im Bereich von 0,001 bis 10 Gew.-% liegt, bezogen auf den nichtflüchtigen Anteil der Zusammensetzung.

7. Beschichtungszusammensetzung gemäß einem der vorstehenden Ansprüche, wobei die Menge der Carbonsäure, deren Carbonylgruppe sich in Konjugation mit einem π-Elektronensystem befindet, im Bereich von 0,1 bis 18 Gew.-% liegt, bezogen auf den nichtflüchtigen Anteil der Zusammensetzung.

8. Beschichtungszusammensetzung gemäß einem der vorstehenden Ansprüche, wobei die Zusammensetzung ein flüchtiges organisches Lösungsmittel umfasst.

9. Beschichtungszusammensetzung gemäß Anspruch 8, wobei die Menge des flüchtigen organischen Lösungsmittels 420 g/l der Beschichtungszusammensetzung nicht übersteigt.

10. Teilesatz zur Herstellung der Beschichtungszusammensetzung gemäß einem der vorstehenden Ansprüche, umfassend:
a) ein Bindemittelmodul, das ein Polyol umfasst;
b) ein Vernetzermodul, das ein Polyisocyanat umfasst; und
c) gegebenenfalls ein Verdünnungsmodul, das ein flüchtiges organisches Lösungsmittel umfasst;
wobei der Katalysator auf Metallbasis für die Additionsreaktion von Isocyanatgruppen und Hydroxygruppen, die thiolfunktionelle Verbindung und die Carbonsäure, deren Carbonylgruppe sich in Konjugation mit einem π-Elektronensystem befindet, einzeln oder in Kombination über einen oder mehrere der Module verteilt sind.

11. Teilesatz gemäß Anspruch 10, wobei der Katalysator auf Metallbasis für die Additionsreaktion von Isocyanatgruppen und Hydroxygruppen, die thiolfunktionelle Verbindung und die Carbonsäure, deren Carbonylgruppe sich in Konjugation mit einem π-Elektronensystem befindet, einzeln oder in Kombination über einen oder mehrere der Module a) und c) verteilt sind.

12. Verwendung der Beschichtungszusammensetzung gemäß einem der vorstehenden Ansprüche 1 bis 8 zur Bildung einer Beschichtungsschicht bei der Lackierung und Reparaturlackierung von Autos und Transportfahrzeugen.

13. Verwendung gemäß Anspruch 12, wobei die gebildete Beschichtungsschicht eine Schicht in einer mehrschichtigen Lackbeschichtung ist.

14. Verwendung gemäß Anspruch 13, wobei die gebildete Beschichtungsschicht eine Decklackschicht in einer mehrschichtigen Lackbeschichtung ist.

## Revendications

1. Composition de revêtement comprenant un polyisocyanate, un polyol, un catalyseur à base de métal pour la réaction d'addition des groupes isocyanates et des groupes hydroxyles, un composé thiol-fonctionnel, et un acide carboxylique, **caractérisée en ce que** le groupe carbonyle de l'acide carboxylique est en conjugaison avec un système d'électrons π.

2. Composition de revêtement selon la revendication 1, dans laquelle l'acide carboxylique est un acide carboxylique aromatique.

3. Composition de revêtement selon la revendication 1, dans laquelle l'acide carboxylique est un acide carboxylique insaturé alpha-bêta.

4. Composition de revêtement selon l'une quelconque des revendications précédentes, dans laquelle le catalyseur pour la réaction d'addition des groupes isocyanates et des groupes hydroxyles est à base d'un métal choisi parmi l'étain, le bismuth, le zirconium, et les mélanges de ceux-ci.

5. Composition de revêtement selon l'une quelconque des revendications précédentes, dans laquelle la quantité de catalyseur à base de métal se situe dans la plage allant de 0,001 à 10 % en poids, calculée sur la matière non volatile de la composition.

6. Composition de revêtement selon l'une quelconque des revendications précédentes, dans laquelle la quantité de composé thiol-fonctionnel se situe dans la plage allant de 0,001 à 10 % en poids, calculée sur la matière non volatile de la composition.

7. Composition de revêtement selon l'une quelconque des revendications précédentes, dans laquelle la quantité d'acide carboxylique, dans lequel le groupe carbonyle de l'acide carboxylique est en conjugaison avec un système d'électrons π, se situe dans la plage allant de 0,1 à 18 % en poids, calculée sur la matière non volatile de la composition.

8. Composition de revêtement selon l'une quelconque des revendications précédentes, dans laquelle la composition comprend un solvant organique volatil.

9. Composition de revêtement selon la revendication 8, dans laquelle la quantité de solvant organique volatil n'excède pas 420 g/l de la composition de revêtement.

10. Kit de pièces pour préparer la composition de revêtement selon l'une quelconque des revendications précédentes, comprenant :
a) un module de liaison comprenant un polyol,
b) un module de réticulation comprenant un polyisocyanate, et
c) éventuellement, un module de dilution comprenant un solvant organique volatil,
dans laquelle le catalyseur à base de métal pour la réaction d'addition des groupes isocyanates et des groupes hydroxyles, le composé thiol-fonctionnel, et l'acide carboxylique dans lequel le groupe carbonyle de l'acide carboxylique est en conjugaison avec un système d'électrons π, sont répartis, individuellement ou en combinaison, sur un ou plusieurs des modules.

11. Kit de pièces selon la revendication 10, dans lequel le catalyseur à base de métal pour la réaction d'addition des groupes isocyanates et des groupes hydroxyles, le composé thiol-fonctionnel, et l'acide carboxylique dans lequel le groupe carbonyle de l'acide carboxylique est en conjugaison avec un système d'électrons π, sont répartis, individuellement ou en combinaison, sur un ou plusieurs des modules a) et c).

12. Utilisation de la composition de revêtement selon l'une quelconque des revendications précédentes 1 à 8 pour former une couche de revêtement dans l'apprêtage et la réfection des peintures des automobiles et des véhicules de transport.

13. Utilisation selon la revendication 12, dans laquelle la couche de revêtement formée est une couche dans un revêtement de laque multicouches.

14. Utilisation selon la revendication 13, dans laquelle la couche de revêtement formée est une couche supérieure de revêtement dans un revêtement de laque multicouches.
